# EUROPEAN PATENT SPECIFICATION

(11) **EP 3 563 057 B1**
(45) Date of publication and mention of the grant of the patent: **07.08.2024**
(21) Application number: 16925745.8
(22) Date of filing: 30.12.2016
(51) Int. Cl.: F03D 80/00, F03D 1/06, F03D 7/02, F03D 15/00

(54) **HUB-TO-SHAFT ADAPTER FOR A ROTOR ASSEMBLY OF A WIND TURBINE AND RELATED ASSEMBLY METHODS**
NABEN-WELLEN-ADAPTER FÜR EINE ROTORANORDNUNG EINER WINDTURBINE UND ZUGEHÖRIGE MONTAGEVERFAHREN
ADAPTATEUR MOYEU-ARBRE POUR UN ENSEMBLE ROTOR D'UNE ÉOLIENNE ET PROCÉDÉS D'ASSEMBLAGE ASSOCIÉS

(43) Date of publication of application: 06.11.2019
(73) Proprietor: General Electric Renovables España, S.L., 08005 Barcelona (ES)
(72) Inventor: NANUKUTTAN, Biju, Bangalore Karnataka 560066 (IN); SHIVASHANKAR, Abhijit, Bangalore Karnataka 560066 (IN); PATHUVOTH, Dhanesh Chandrashekar, Bangalore Karnataka 560066 (IN); PAN, Wenguang, Shanghai 201203 (CN); MEESALA, Sagar Vidya, 48499 Salzbergen Niedersachsen (DE); HINKEN, Frank, 48499 Salzbergen Niedersachsen (DE)
(74) Representative: Zimmermann & Partner Patentanwälte mbB
(86) International application number: PCT/CN2016/113648
(87) International publication number: WO 2018/120081

(56) References cited:
- EP-A1- 3 034 864
- CN-A- 1 924 381
- CN-A- 105 604 809
- DE-A1- 102015 210 553
- KR-A- 20130 010 296
- KR-B1- 101 362 936
- US-A1- 2008 240 922
- US-A1- 2010 028 153
- US-A1- 2014 154 077

## Description

### FIELD OF THE INVENTION

The present subject matter relates generally to wind turbines and, more particularly, to a hub-to-shaft adapter for a rotor assembly of a wind turbine and related assembly methods.

### BACKGROUND OF THE INVENTION

Wind power is considered one of the cleanest, most environmentally friendly energy sources presently available, and wind turbines have gained increased attention in this regard. A modern wind turbine typically includes a tower, generator, gearbox, nacelle, and one or more turbine blades. The turbine blades capture kinetic energy from wind using known airfoil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

To ensure that wind power remains a viable energy source, efforts have been made to increase energy outputs by modifying the size and capacity of wind turbines. One such modification has been to increase the length of the rotor blades. However, as is generally known, the deflection of a rotor blade is a function of blade length, along with wind speed, turbine operating states and blade stiffness. Thus, longer rotor blades may be subject to increased deflection forces. These increased deflection forces produce fatigue on the rotor blades and other wind turbine components.

When installing longer rotor blades on a wind turbine, it is often necessary to replace or upgrade the rotor hub to provide a larger hub capable of handling the increased loads associated with the increased rotor diameter. Unfortunately, it is often the case that the larger hub is not configured to be mounted to the existing rotor shaft of the wind turbine. For instance, the bolt holes defined in the hub may be mismatched or misaligned with the bolt holes defined in the shaft. As such, the rotor shaft must be replaced or upgraded in addition to the hub to allow the various rotor
components of the wind turbine to be assembled together. This required replacement or upgrade of the rotor shaft is typically quite expensive and, thus, significantly increases the overall costs associated with increasing the rotor diameter of a wind turbine.

Accordingly, a hub-to-shaft adapter that can be used to couple a hub to a rotor shaft in instances in which the components have mismatched or misaligned bolt holes would be welcomed in the technology.

US2010/028153A1 a method for installing a rotor hub on a rotor shaft of a wind energy plant, and a wind energy plant. EP3034864 is another prior art document comprising a reinforced rotor to shaft assembly.

### BRIEF DESCRIPTION OF THE INVENTION

Aspects and advantages of the invention will be set forth in part in the following description, or may be obvious from the description, or may be learned through practice of the invention.

In one aspect, the present subject matter is directed to a rotor assembly for a wind turbine, according to claim 1.

The rotor assembly may include a rotor hub having a mounting flange that defines an array of hub bolt holes. The rotor assembly may also include a rotor shaft having a shaft flange that defines an array of shaft bolt holes. The array of shaft bolt holes may be at least one of circumferentially offset or radially offset from the array of hub bolt holes. In addition, the rotor assembly may include a hub-to-shaft adapter coupled between the mounting flange and the shaft flange. The adapter may define a first array of adapter bolt holes and a second array of adapter bolt holes spaced offset from the first array of adapter bolt holes. The first array of adapter bolt holes may be configured to be aligned with the array of hub bolt holes defined in the mounting flange and the second array of adapter bolt holes may be configured to be aligned with the array of shaft bolt holes defined in the shaft flange.

In another aspect, the present subject matter is directed to a method for assembling components of a rotor assembly of a wind turbine, according to claim 12, wherein the rotor assembly includes a rotor hub having a mounting flange and a rotor shaft having a shaft flange. The method may include positioning an adapter between the mounting flange and the shaft flange, with the adapter defining a first array of adapter bolt holes and a second array of adapter bolt holes. The first array of adapter bolt holes may be at least one of radially offset or circumferentially offset from the second array of adapter bolt holes. The method may also include aligning the first array of adapter bolt holes with an array of hub bolt holes defined in the mounting flange and aligning the second array of adapter bolt holes with an array of shaft bolt holes defined in the shaft flange, wherein the array of shaft bolt holes are offset from the array of hub bolt holes.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a wind turbine;
FIG. 2 illustrates a perspective, internal view of one embodiment of a nacelle suitable for use with the wind turbine shown in FIG. 1;
FIG. 3 illustrates a perspective, exploded view of one embodiment of a rotor assembly in accordance with aspects of the present subject matter, particularly illustrating an adapter configured to be coupled between a hub and a rotor shaft of the rotor assembly;
FIG. 4 illustrates a close-up view of a portion of the rotor assembly components show in FIG. 3;
FIG. 5 illustrates a partial, cross-sectional view of the rotor assembly components shown in FIGS. 3 and 4 assembled together, particularly illustrating the adapter coupled between a mounting flange of the hub and a shaft flange of the rotor shaft;
FIG. 6 illustrates a partial, cross-sectional view of another embodiment of the disclosed rotor assembly components assembled together, particularly illustrating another embodiment of a hub-to-shaft adapter in accordance with aspects of the present subject matter;
FIG. 7 illustrates another partial, cross-sectional view similar to that shown in FIG. 6, particularly illustrating a variation of the embodiment of the hub-to-shaft adapter shown in FIG. 6;
FIG. 8 illustrates a partial, cross-sectional view of yet another embodiment of the disclosed rotor assembly components assembled together, particularly illustrating a further embodiment of a hub-to-shaft adapter in accordance with aspects of the present subject matter;
FIG. 9 illustrates a similar cross-sectional view of the rotor assembly components shown in FIG. 8, particularly illustrating the adapter configured for use with a rotor locking system of the wind turbine; and

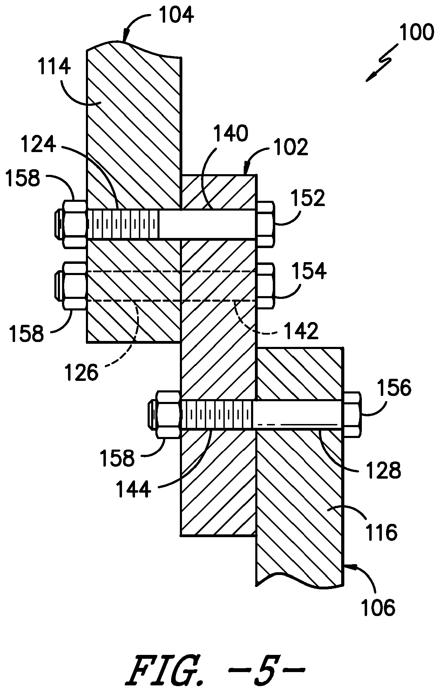

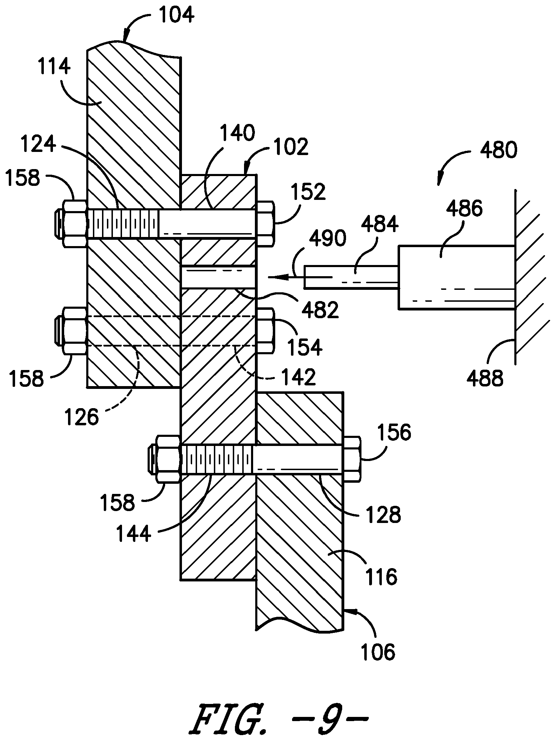

FIG. 9 illustrates a cross-sectional view of the rotor assembly components shown in FIG. 5, particularly illustrating the adapter configured for use with one embodiment of a rotor locking system of the wind turbine; and

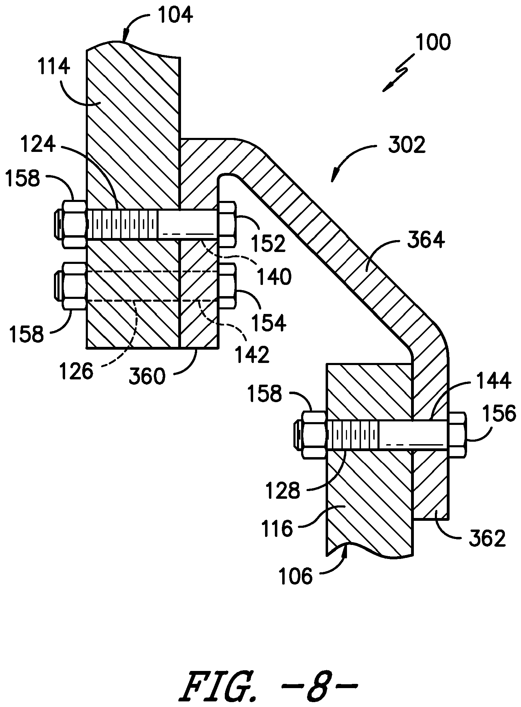

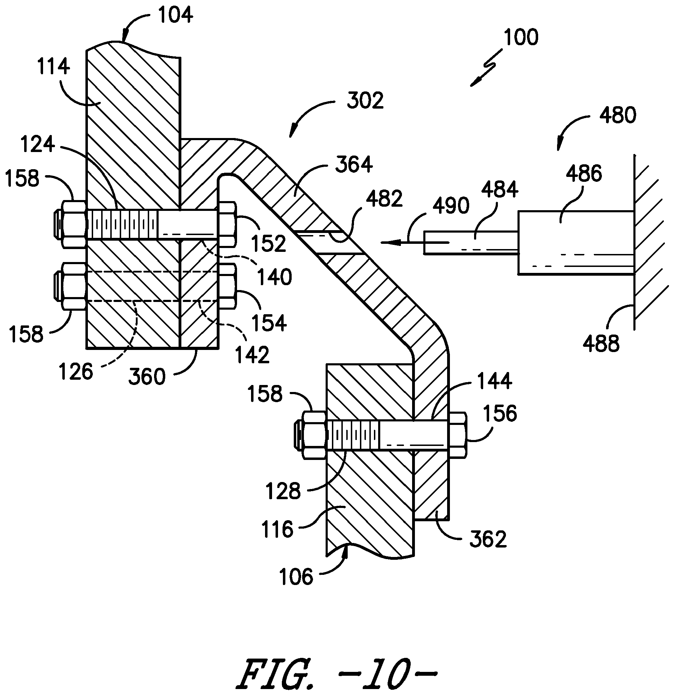

FIG. 10 illustrates a cross-sectional view of the rotor assembly components shown in FIG. 8, particularly illustrating the adapter configured for use with the embodiment of the rotor locking system shown in FIG. 9.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

In general, the present subject matter is directed to a rotor assembly for a wind turbine having a hub-to-shaft adapter and related methods for assembling the various rotor assembly components. Specifically, in several embodiments, the adapter may be configured to be coupled between a hub and a rotor shaft of the rotor assembly. As will be described below, the adapter may be configured to allow the rotor shaft to be coupled to the hub despite such components defining mismatched or misaligned bolt holes, such as when the components define differing bolt hole patterns or different bolt circle or array diameters. As such, when one of the rotor assembly components is replaced or upgraded, the adapter may be used to assemble the rotor assembly components together. For instance, when the hub is upgraded to a larger hub, the existing, smaller rotor shaft may be coupled to the larger hub via the disclosed adapter.

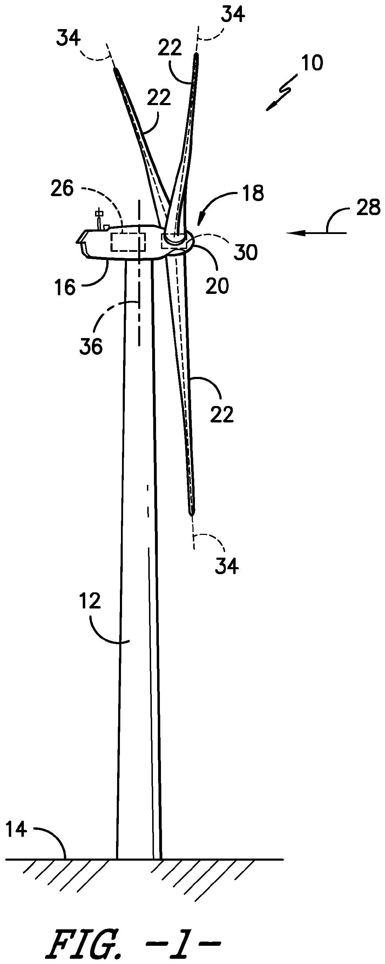

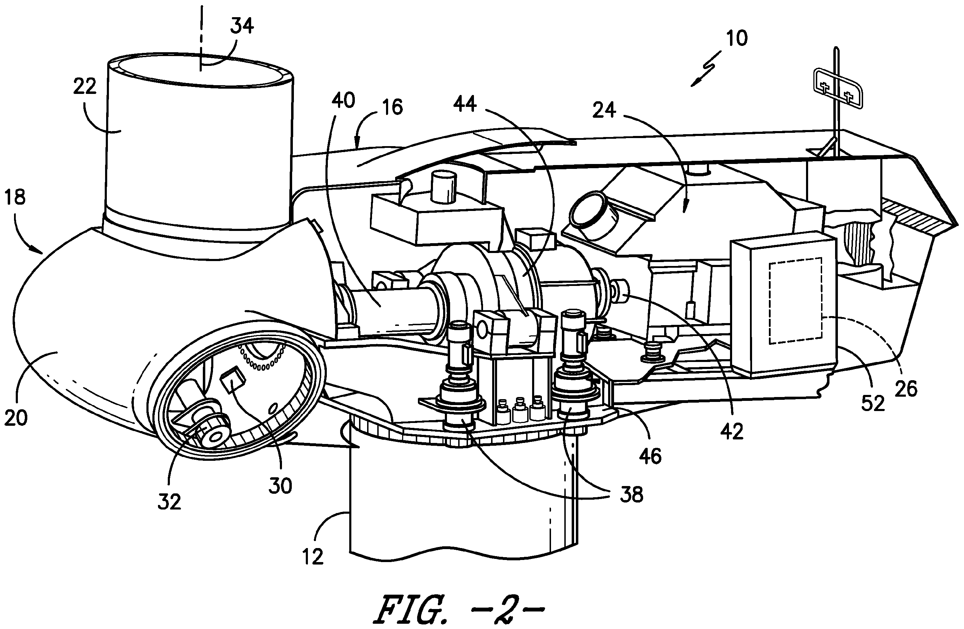

Referring now to the drawings, FIG. 1 illustrates perspective view of one embodiment of a wind turbine 10. As shown, the wind turbine 10 includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 (FIG. 2) positioned within the nacelle 16 to permit electrical energy to be produced.

As shown, the wind turbine 10 may also include a turbine control system or a turbine controller 26 centralized within the nacelle 16. However, it should be appreciated that the turbine controller 26 may be disposed at any location on or in the wind turbine 10, at any location on the support surface 14 or generally at any other location. The turbine controller 26 may generally be configured to control the various operating modes (e.g., start-up or shut-down sequences) and/or components of the wind turbine 10. For example, the controller 26 may be configured to control the blade pitch or pitch angle of each of the rotor blades 22 (i.e., an angle that determines a perspective of the rotor blades 22 with respect to the direction 28 of the wind) to control the loading on the rotor blades 22 by adjusting an angular position of at least one rotor blade 22 relative to the wind. For instance, the turbine controller 26 may control the pitch angle of the rotor blades 22, either individually or simultaneously, by transmitting suitable control signals/commands to a pitch controller 30 of the wind turbine 10, which may be configured to control the operation of a plurality of pitch drives or pitch adjustment mechanisms 32 (FIG. 2) of the wind turbine. Specifically, the rotor blades 22 may be rotatably mounted to the hub 20 by one or more pitch bearing(s) (not illustrated) such that the pitch angle may be adjusted by rotating the rotor blades 22 along their pitch axes 34 using the pitch adjustment mechanisms 32. Further, as the direction 28 of the wind changes, the turbine controller 26 may be configured to control a yaw direction of the nacelle 16 about a yaw axis 36 to position the rotor blades 22 with respect to the direction 28 of the wind, thereby controlling the loads acting on the wind turbine 10. For example, the turbine controller 26 may be configured to transmit control signals/commands to a yaw drive mechanism 38 (FIG. 2) of the wind turbine 10 such that the nacelle 16 may be rotated about the yaw axis 30.

Referring now to FIG. 2, a simplified, internal view of one embodiment of the nacelle 16 of the wind turbine 10 shown in FIG. 1 is illustrated in accordance with aspects of the present subject matter. As shown, a generator 24 may be disposed within the nacelle 16. In general, the generator 24 may be coupled to the rotor 18 of the wind turbine 10 for generating electrical power from the rotational energy generated by the rotor 18. For example, the rotor 18 may include a main rotor shaft 40 coupled to the hub 20 for rotation therewith. The generator 24 may then be coupled to the rotor shaft 40 such that rotation of the rotor shaft 40 drives the generator 24. For instance, in the illustrated embodiment, the generator 24 includes a generator shaft 42 rotatably coupled to the rotor shaft 40 through a gearbox 44. However, in other embodiments, it should be appreciated that the generator shaft 42 may be rotatably coupled directly to the rotor shaft 40. Alternatively, the generator 24 may be directly rotatably coupled to the rotor shaft 40 (often referred to as a "direct-drive wind turbine"). It should be appreciated that the rotor shaft 40 may generally be supported within the nacelle 16 by a support frame or bedplate 46 positioned atop the wind turbine tower 12.

Additionally, as indicated above, the turbine controller 26 may also be located within the nacelle 16 of the wind turbine 10. For example, as shown in the illustrated embodiment, the turbine controller 26 is disposed within a control cabinet 52 mounted to a portion of the nacelle 16. However, in other embodiments, the turbine controller 26 may be disposed at any other suitable location on and/or within the wind turbine 10 or at any suitable location remote to the wind turbine 10. Moreover, as described above, the turbine controller 26 may also be communicatively coupled to various components of the wind turbine 10 for generally controlling the wind turbine and/or such components. For example, the turbine controller 26 may be communicatively coupled to the yaw drive mechanism(s) 38 of the wind turbine 10 for controlling and/or altering the yaw direction of the nacelle 16 relative to the direction 28 (FIG. 1) of the wind. Similarly, the turbine controller 26 may also be communicatively coupled to each pitch adjustment mechanism 32 of the wind turbine 10 (one of which is shown) through the pitch controller 30 for controlling and/or altering the pitch angle of the rotor blades 22 relative to the direction 28 of the wind. For instance, the turbine controller 26 may be configured to transmit a control signal/command to each pitch adjustment mechanism 32 such that one or more actuators (not shown) of the pitch adjustment mechanism 32 may be utilized to rotate the blades 22 relative to the hub 20.

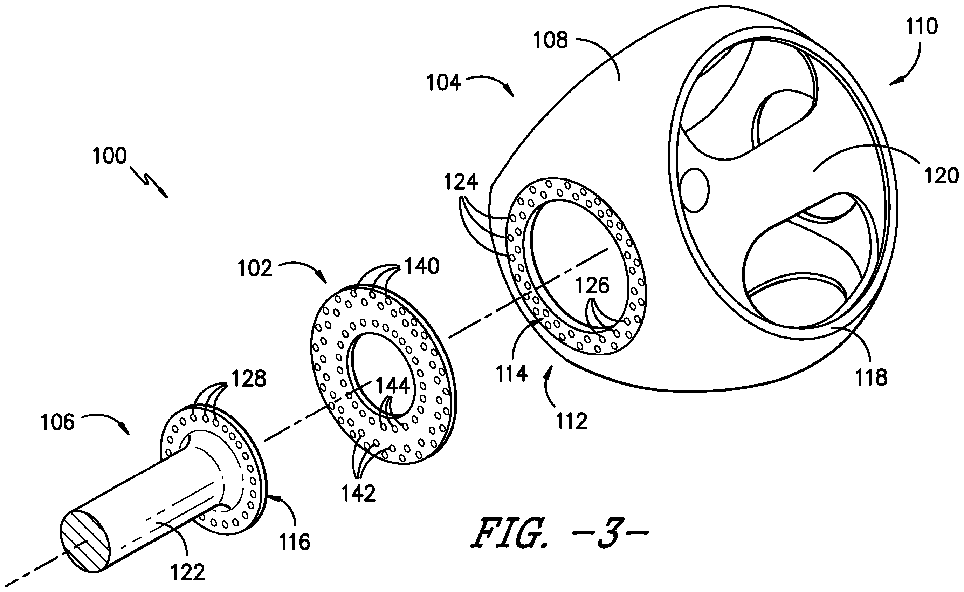

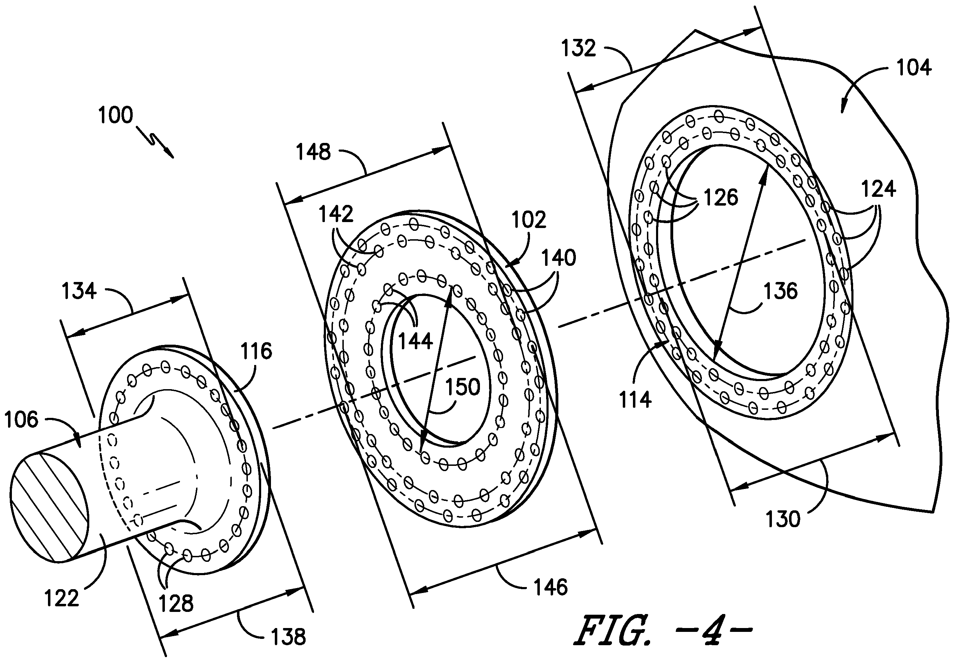

Referring now to FIGS. 3 and 4, one embodiment of a rotor assembly 100 having a hub-to-shaft adapter 102 for coupling a hub 104 of the rotor assembly 100 to a corresponding rotor shaft 106 of the rotor assembly 100 is illustrated in accordance with aspects of the present subject matter. Specifically, FIG. 3 illustrates an exploded perspective view of the components of the rotor assembly 100 and FIG. 4 illustrates a close-up view of a portion of the rotor assembly components shown in FIG. 3. In several embodiments, the rotor assembly 100 will be described herein with reference to the wind turbine 10 described above with reference to FIGS. 1 and 2. However, it should be appreciated that the disclosed rotor assembly 100 may generally be utilized within any suitable wind turbine in which it is desirable to include an adapter coupled between the wind turbine's hub and rotor shaft.

In general, the rotor assembly 100 may include a rotor hub 104, a rotor shaft 106, and a hub-to-shaft adapter 102 configured to be couples between the hub 104 and the shaft 106. The hub 104 may generally be configured the same as or similar to any suitable rotor hub known in the art (e.g., by being configured similar to the hub 20 shown in FIGS. 1 and 2). For example, as shown in FIG. 3, the hub 104 may comprise a hollow body 108 extending between a first end 110 and a second end 112. The first end 110 may generally correspond to the forward end of the rotor hub 104 (i.e., the end furthest away from the nacelle 16 when the rotor hub 104 is disposed in its assembled position on the wind turbine 10) and the second end 112 may generally correspond to the aft end of the rotor hub 104 (i.e., the end closest to the nacelle 16 when the rotor hub 104 is disposed in its assembled position on a wind turbine 10). Additionally, as particularly shown in FIGS. 3 and 4, the hub may define a planar hub mounting flange 114 at or adjacent to its second end 112. Typically, the hub mounting flange 114 is configured to be coupled directly to a corresponding shaft flange 116 of the rotor shaft 106.

It should also be appreciated that hub 104 may also include a plurality of blade flanges 118 spaced apart around its outer perimeter. In general, the number of blade flanges 118 may correspond to the number of rotor blades 22 of the wind turbine 10. For instance, for the wind turbine 10 shown in FIGS. 1 and 2, the hub 104 may include three blade flanges 118, with each blade flange 118 being spaced apart from one another by approximately 120 degrees. Each blade flange 118 may generally be configured to be coupled to one of the rotor blades 22 via a pitch bearing (not shown) of the wind turbine 10. For example, in several embodiments, each blade flange 118 may define a generally planar, circular area to which a suitable pitch bearing may be secured (e.g., using bolts and/or any other suitable fastening mechanisms). In addition, in one embodiment, the rotor hub 104 may also include one or more stiffening webs 120 extending across an opening defined by each blade flange 118. As is generally understood, the stiffening web(s) 120 may be configured to increase the structural stiffness and rigidity of the rotor hub 104 at and/or adjacent to each blade flange 118.

Referring still to FIGS. 3 and 4, the rotor shaft 106 may generally be configured the same as or similar to any suitable rotor shaft known in the art (e.g., by being configured similar to the shaft 40 shown in FIG. 2). For example, the shaft 106 may include a shaft portion 122 configured to rotationally drive the generator 24 of the wind turbine 10. Additionally, the shaft 106 may include a shaft flange 116 positioned at its end closest to the hub 104. As indicated above, the shaft flange 116 is typically configured to be coupled directly to the corresponding mounting flange 114 of the hub 104.

To facilitate coupling the rotor shaft 106 to the hub 104, the mounting flange 114 of the hub 104 and the shaft flange 116 of the shaft 106 typically include corresponding arrays of bolt holes defining the same bolt hole pattern and the same bolt array diameter to allow suitable bolts or other fasteners to be inserted through the aligned bolt holes of the hub mounting flange 114 and the shaft flange 116. However, as indicated above, when either the hub 104 or the shaft 106 has been replaced or upgraded, the new component(s) may include an array(s) of bolt holes that does not define the same bolt hole pattern and/or the same bolt array diameter as the other rotor assembly component. In such instance, the disclosed hub-to-shaft adapter 102 may be utilized to allow the hub 104 to be mounted to the rotor shaft 106.

For instance, in the illustrated embodiment, the mounting flange 114 of the hub 104 defines two annular arrays of hub bolt holes (e.g., an outer array of hub bolt holes 124 and an inner array of hub bolt holes 126 spaced radially inwardly from the outer array 124) and the shaft flange 116 of the shaft 106 defines a single annular array of shaft bolt holes 128, with the bolt hole patterns and/or the bolt array diameters for the hub bolt holes 124, 126 differing from the bolt hole pattern and/or the bolt array diameter for the shaft bolt holes 128. Specifically, as shown in FIG. 4, the inner array of hub bolt holes 126 defines an inner bolt array diameter 130 and the outer array of hub bolt holes 124 defines an outer bolt array diameter 132, with the inner bolt array diameter 130 being smaller than the outer bolt array diameter 132. Similarly, the shaft bolt holes 128 define a shaft bolt array diameter 134, with the shaft bolt array diameter 134 being smaller than both the outer bolt array diameter 132 and the inner bolt array diameter 130. In addition to differing radial dimensions, the various arrays of bolt holes 124, 126, 128 may also be circumferentially offset from one another. For instance, the arrays of hub bolt holes 124, 126 may define a given circumferential spacing between each pair adjacent bolt holes that differs from the circumferential spacing defined between adjacent bolt holes of the array of shaft bolt holes 128.

It should be appreciated that the specific bolt hole patterns shown in the illustrated embodiment are simply provided as example bolt hole patterns that may be used for the bolt holes of the hub mounting flange 114 and the shaft flange 116. In other embodiments, the hub mounting flange 114 may define bolt holes having any other suitable circumferential spacing and/or may include a single array of bolt holes or three or more arrays of bolt holes. Similarly, the rotor shaft 116 may define bolt holes having any other suitable circumferential spacing and/or may include two or more arrays of bolt holes. Additionally, the specific bolt array diameters shown in the illustrated embodiment are simply provided as example bolt array diameters for the bolt holes of the hub mounting flange 114 and the shaft flange 116. In other embodiments, the shaft flange 116 may include an array of bolts defining a bolt array diameter that is larger than the bolt array diameter(s) associated with the bolt holes of the hub mounting flange 114.

As shown in FIG. 4, the hub mounting flange 114 may also define an inner diameter 136 around its inner circumference and the shaft flange 116 may define an outer diameter 138 around its outer circumference. In one embodiment, the inner diameter 136 of the hub mounting flange 114 may be greater than or equal to the outer diameter 138 of the shaft flange 116. In another embodiment, the inner diameter 136 of the hub mounting flange 114 may be less than the outer diameter 138 of the shaft flange 116.

In several embodiments, the hub-to-shaft adapter 102 of the disclosed rotor assembly 100 may be configured to accommodate the differences in the bolt hole patterns and/or the bolt array diameters between the hub mounting flange 114 and the shaft flange 116 to allow the hub 104 to be coupled to the shaft 106. Specifically, the adapter 102 may define one or more arrays of adapter bolt holes 140, 142 configured to match the array(s) of hub bolt holes 124, 126 defined in the hub mounting flange 114 and one or more other arrays of adapter bolt holes 144 configured to match the array(s) of shaft bolt holes 128 defined in the shaft flange 116. For example, as shown in the illustrated embodiment, the adapter 102 may define a first array of adapter bolt holes 140 having the same circumferential bolt hole spacing or pattern as the outer array of hub bolt holes 124, with the first array of adapter bolt holes 140 defining a first bolt array diameter 146 that is equal or substantially equal to the bolt array diameter 132 of the outer array of hub bolt holes 124. Similarly, the adapter 102 may define a second array of adapter bolt holes 142 having the same circumferential bolt hole spacing or pattern as the inner array of hub bolt holes 126, with the second array of adapter bolt holes 142 defining a second bolt array diameter 148 that is equal or substantially equal to the bolt array diameter 130 of the inner array of hub bolt holes 126. Additionally, as shown in FIG. 4, the adapter 102 may define a third array of adapter bolt holes 144 having the same circumferential bolt hole spacing or pattern as the array of shaft bolt holes 128, with the third array of adapter bolt holes 144 defining a third bolt array diameter 150 that is equal or substantially equal to the bolt array diameter 134 of the array of shaft bolt holes 128.

It should be appreciated that, given the differing bolt array diameters, each array of adapter bolt holes 140, 142, 144 may be spaced radially apart from the adjacent array(s) of adapter bolt holes. For instance, in the illustrated embodiment, the second array of adapter bolt holes 142 is spaced radially inwardly from the first array of adapter bolt holes 140 and radially outwardly form the third array of adapter bolt holes 144. As such, the arrays of adapter bolt holes 140, 142 configured to align with the arrays of hub bolt holes 124, 126 are both spaced radially outwardly from the array of adapter bolt holes 144 configured to align with the array of shaft bolt holes 128.

In the illustrated embodiment, the adapter 102 may be positioned directly between the hub mounting flange 114 and the shaft flange 116 to facilitate coupling the hub 104 to the shaft 106. Specifically, when the components are properly aligned both radially and circumferentially, a plurality of fasteners may be inserted through the aligned openings defined between the hub mounting flange 114 and the adapter 102 to directly couple the adapter 102 to the hub 104. In addition, a plurality of fasteners may be inserted through the aligned openings defined between the shaft flange 116 and the adapter 102 to directly couple the adapter 102 to the shaft 106.

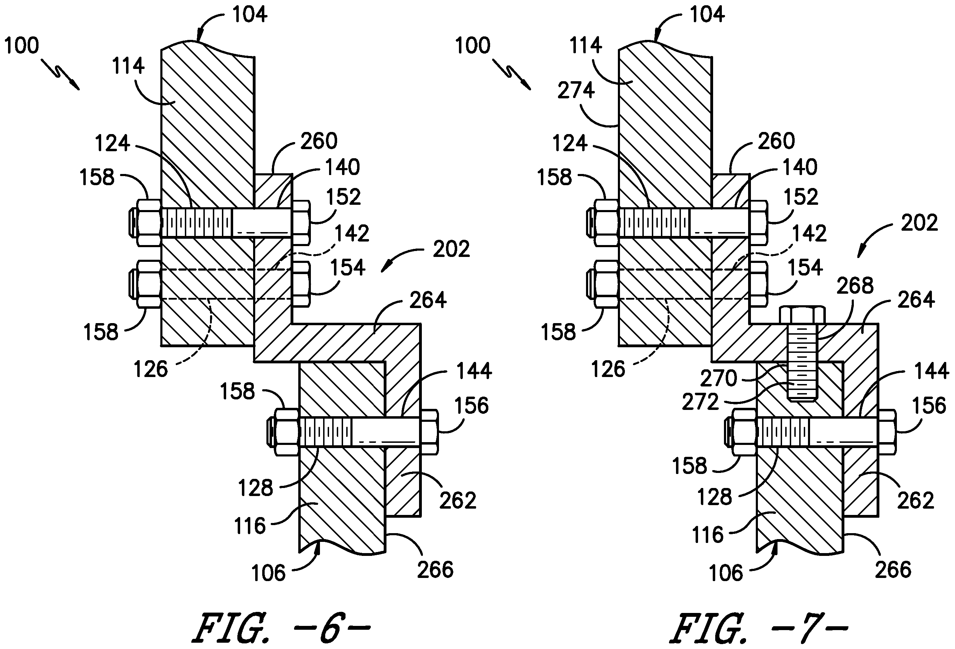

In the illustrated embodiment, the hub-to-shaft adapter 102 is shown as being configured as a planar structural member. However, in other embodiments, the adapter 102 may have any other suitable configuration that allows it to function as described herein. For instance, as will be described below, the adapter 102 may have a non-planar profile (e.g., such as by defining axially offset mounting flanges (FIGS. 6 and 7) or by having a coned or tapered profile (FIG. 8)). Additionally, as shown in FIGS. 3 and 4, the adapter 102 is ring-shaped. However, in other embodiments, the adapter 102 may define a continuous or solid radial cross-section.

Referring now to FIG. 5, a partial, cross-sectional view of the components of the rotor assembly 100 shown in FIGS. 3 and 4 assembled together is illustrated in accordance with aspects of the present subject matter. In particular, FIG. 5 illustrates the adapter 102 coupled directly between the mounting flange 114 of the hub 104 and the shaft flange 116 of the shaft 106.

As shown in FIG. 5, by properly aligning the adapter 102 both circumferentially and radially relative to the hub mounting flange 114 and the shaft flange 116, the adapter 102 may be coupled to both the hub 104 and the shaft 106 using suitable fasteners, such as bolts 152, 154, 156. For instance, to couple the adapter 102 to the hub 104, a first set of bolts 152 may be inserted through the circumferentially and radially aligned pairs of bolt holes of the first array of adapter bolt holes 140 and the outer array of hub bolt holes 124 while a second set of bolts 154 may be inserted through the circumferentially and radially aligned pairs of bolt holes of the second array adapter bolt holes (shown by dashed lines 142 in FIG. 5) and the inner array of hub bolt holes (shown by dashed lines 126 in FIG. 5). Similarly, to couple the adapter 102 to the shaft 106, a third set of bolts 156 may be inserted through the circumferentially and radially aligned pairs of bolt holes of the third array of adapter bolt holes 144 and the array of shaft bolt holes 134. The bolts 153, 154, 156 may then be secured within the aligned bolt holes (e.g., using nuts 158 or other locking mechanisms) to complete the assembly.

Referring now to FIG. 6, a cross-sectional view of another embodiment of a hub-to-shaft adapter 202 is illustrated in accordance with aspects of the present subject matter. Specifically, FIG. 6 illustrates a similar cross-sectional view to that shown in FIG. 5, with the adapter 202 being coupled directly between the mounting flange 114 of the hub 104 and the shaft flange 116 of the shaft 106.

In general, the adapter 202 may be configured similar to the hub-to-shaft adapter 102 described above. Thus, in several embodiments, the adapter 202 may define one or more arrays of adapter bolt holes configured to match the array(s) of hub bolt holes 124, 126 defined in the hub mounting flange 114 and one or more other arrays of adapter bolt holes configured to match the array(s) of shaft bolt holes 128 defined in the shaft flange 116. For example, as shown in FIG. 6, the adapter 202 may define first and second arrays of adapter bolt holes 140, 142 configured to be radially and circumferentially aligned with the outer and inner arrays of hub bolt holes 124, 126, respectively, defined in the hub mounting flange 114. Similarly, the adapter 202 may define a third array of adapter bolt holes 144 configured to be radially and circumferentially aligned with the array of shaft bolt holes 128 defined in the shaft flange 116. In such an embodiment, similar to the embodiment described above, suitable fasteners may be inserted through the aligned bolt holes to couple the adapter 202 to both the hub 104 and the shaft 106. For instance, first and second sets of bolts 152, 154 may be inserted through the aligned bolt holes defined between the adapter 202 and the hub mounting flange 114 and a third set of bolts 156 may be inserted through the aligned bolt holes defined between the adapter 202 and the shaft flange 116.

However, unlike the adapter 102 described above, the adapter 202 shown in FIG. 6 defines a non-planar profile. Specifically, in several embodiments, the adapter 202 may include first and second mounting flanges 262, 264 spaced apart axially from one another, with the first mounting flange 262 being configured to be coupled to the mounting flange 114 of the hub 104 and the second mounting flange 264 being configured to be coupled to the shaft flange 116 of the shaft 106. In such embodiments, the array(s) of adapter bolt holes configured to be aligned with the corresponding array(s) of hub bolt holes 124, 126 (e.g., the first and second arrays of adapter bolt holes 140, 142) may be defined in the first mounting flange 262 while the array(s) of adapter bolt holes configured to be aligned with the corresponding array(s) of shaft bolt holes 128 (e.g., the third array of adapter bolt hole 144) may be defined in the second mounting flange 264.

Additionally, as shown in FIG. 6, the adapter 202 may also include a connector portion 264 extending axially between the first and second mounting flanges 260, 262, with the first mounting flange 260 extending radially outwardly from the connector portion 264 and the second mounting flange 262 extending radially inwardly from the connector portion 264. In one embodiment, the connector portion 264 may define a suitable axial length such that the second mounting flange is positioned along a side 266 of the shaft flange 116 opposite the side of the shaft flange 116 closest to the hub mounting flange 114. Moreover, in one embodiment, the connector portion 264 may be cylindrically shaped, such as by defining a constant diameter along its axial length between the first and second mounting flanges 260, 262. However, as will be described below with reference to FIG 8, in other embodiments, the connector portion 264 may define any other suitable axial profile, such as by defining a coned or tapered profile.

Referring now to FIG. 7, a cross-sectional view of a variation of the embodiment of the adapter 202 shown in FIG. 6 is illustrated in accordance with aspects of the present subject matter. Specifically, as shown, one or more bolt holes 268 (e.g., an annular array of bolt holes) may be defined radially through the connector portion 264 of the adapter 202. In such an embodiment, the bolt holes 268 may be aligned with corresponding radially oriented bolt holes 270 defined through the shaft flange 116 (e.g., around its outer circumference) to allow suitable fasteners 272 to be inserted through the aligned bolt holes 268, 270, thereby providing an additional means for coupling the adapter 202 to the rotor shaft 106.

It should be appreciated that, in other embodiments, the bolt holes 268 defined through the connector portion 264 may, instead, be configured to be aligned with corresponding radially oriented bolt holes (not shown) defined through the hub mounting flange 114 (e.g., around its inner circumference). For instance, in one embodiment, the first mounting flange 260 of the adapter 202 may be configured to be positioned adjacent to an interior side 274 of the hub mounting flange 114 (e.g., the side of the hub mounting flange 114 opposite the side of the hub mounting flange 114 closest to the shaft flange 116). In such an embodiment, the connector portion 264 may extend across the inner circumference of the hub mounting flange 114, thereby allowing the radially oriented bolt holes 268 defined in the connector portion 264 to be aligned with corresponding bolt holes defined in the hub mounting flange 114.

Referring now to FIG. 8, a cross-sectional view of a further embodiment of a hub-to-shaft adapter 302 is illustrated in accordance with aspects of the present subject matter. Specifically, FIG. 8 illustrates a similar cross-sectional view to that shown in FIGS. 5-7, with the adapter 302 being coupled directly between the mounting flange 114 of the hub 104 and the shaft flange 106 of the shaft 116.

In general, the adapter 302 may be configured similar to the hub-to-shaft adapters 102, 202 described above with reference to FIGS. 5-7. Thus, in several embodiments, the adapter 302 may define one or more arrays of adapter bolt holes configured to match the array(s) of hub bolt holes 124, 126 defined in the hub mounting flange 114 and one or more other arrays of adapter bolt holes configured to match the array(s) of shaft bolt holes 128 defined in the shaft flange 116. For example, as shown in FIG. 8, the adapter 302 may define first and second arrays of adapter bolt holes 140, 142 configured to be radially and circumferentially aligned with the outer and inner arrays of hub bolt holes 124, 126, respectively, defined in the hub mounting flange 114. Similarly, the adapter 302 may define a third array of adapter bolt holes 144 configured to be radially and circumferentially aligned with the array of shaft bolt holes 128 defined in the shaft flange 116. In such an embodiment, similar to the embodiments described above, suitable fasteners may be inserted through the aligned bolt holes to couple the adapter 302 to both the hub 104 and the shaft 106. For instance, first and second sets of bolts 152, 154 may be inserted through the aligned bolt holes defined between the adapter 402 and the hub mounting flange 114 and a third set of bolts 156 may be inserted through the aligned bolt holes defined between the adapter 302 and the shaft flange 116.

Additionally, similar to the adapters 202 described above with reference to FIGS. 6 and 7, the adapter 302 may include first and second mounting flanges 360, 362 spaced apart axially from one another and a connector portion 364 extending between the mounting flanges 360, 362, with the first mounting flange 260 being configured to be coupled to the hub mounting flange 114 and the second mounting flange 362 being configured to be coupled to the shaft flange 116. In such embodiments, the array(s) of adapter bolt holes configured to be aligned with the corresponding array(s) of hub bolt holes 124, 126 (e.g., the first and second arrays of adapter bolt holes 140, 142) may be defined in the first mounting flange 360 while the array(s) of adapter bolt holes configured to be aligned with the corresponding array(s) of shaft bolt holes 128 (e.g., the third array of adapter bolt holes 144) may be defined in the second mounting flange 364.

However, unlike the embodiments described above with reference to FIGS. 6 and 7, the connector portion 364 of the adapter 302 defines a coned or tapered profile as it extends axially between the first and second mounting flanges 360, 362. Specifically, as shown in FIG. 8, the connector portion 364 is tapered downwardly between the hub 104 and the shaft 106 such that the diameter of the connector portion 364 decreases as it extends axially from the first mounting flange 360 to the second mounting flange 362. Additionally, unlike the embodiments described above, the first and second mounting flanges 360, 362 both extend radially inwardly from the connector portion 364.

Referring now to FIG. 9, a cross-sectional view of a variation of the embodiment of the adapter 102 shown in FIG. 5 is illustrated in accordance with aspects of the present subject matter. As shown in FIG. 8, in several embodiments, the disclosed hub-to-shaft adapter 102 may be configured to be used in connection with a rotor locking system 480 of the wind turbine 10. Specifically, in several embodiments, the adapter 102 may define one or more rotor lock holes 482 (e.g., an annular array of rotor lock holes 482) configured to receive a corresponding locking pin(s) 484 of the rotor locking system 480. For instance, as shown in FIG. 9, the rotor lock hole(s) 482 is defined radially between first and second arrays of adapter bolt holes 140, 142. However, in other embodiments, the rotor lock hole(s) 482 may be defined at any other suitable location along the adapter 102 that allows the locking pin(s) 484 to be received within the rotor lock hole(s) 482.

As is generally understood, each locking pin 484 of the rotor locking system 480 may be coupled to or form part of a linear actuator 486, with the linear actuator 486 being rigidly coupled to a stationary component 488 of the wind turbine 10, such as the bedplate 46. The linear actuator 486 may correspond to any suitable actuating device that is configured to actuate the locking pin 484 into a corresponding rotor lock hole(s) 482 (e.g., as indicated by arrow 490), such as a hydraulic actuator, a pneumatic actuator and/or any other suitable actuator (e.g., a solenoid-activated actuator). By inserting the locking pin 484 into the rotor lock hole 482, the locking pin 484 may provide a rigid connection between the adapter 102 and the stationary component 488 of the wind turbine 10, thereby preventing rotation of the rotor assembly 100.

It should be appreciated that the rotor locking system 480 may generally be used in combination with any of the adapters 102, 202, 302 described herein. For instance, FIG. 10 illustrates an embodiment of the rotor locking system 480 being used in combination with the adapter 302 shown in FIG. 8. As shown in FIG. 10, a rotor lock hole(s) 482 may be defined in the adapter 302 (e.g., at a location along the tapered connector portion 364) that is configured to receive the locking pin 484

As indicated above, the present subject matter is also directed to a method for assembling components of a rotor assembly of a wind turbine. Specifically, in several embodiments, the method may include positioning an adapter 102, 202, 302 between a mounting flange 114 of a hub 104 of the rotor assembly 100 and a shaft flange 116 of a rotor shaft 106 of the rotor assembly 100. Additionally, the method may include aligning a first array of adapter bolt holes 140, 142 with an array of hub bolt holes 124, 126 defined in the hub mounting flange 114 and aligning a second array of adapter bolt holes 144 with an array of shaft bolt holes 128 defined in the shaft flange 116.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

| Reference Character | Component |
|---|---|
| | |
| 10 | wind turbine |
| 12 | tower |
| 14 | surface |
| 16 | nacelle |
| 18 | rotor |
| 20 | rotatable hub |
| 22 | rotor blade |
| 24 | generator |
| 26 | turbine controller |
| 28 | direction |
| 30 | pitch controller |
| 32 | adjustment mechanism |
| 36 | axis |
| 38 | drive mechanism |
| 40 | rotor shaft |
| 42 | generator shaft |
| 44 | gearbox |
| 46 | bedplate |
| 52 | cabinet |
| 100 | rotor assembly |
| 102 | hub-to-shaft adapter |
| 104 | hub |
| 106 | rotor shaft |
| 108 | hollow body |
| 110 | first end |
| 112 | second end |
| 114 | mounting flange |
| 116 | shaft flange |
| 118 | blade flange |
| 120 | webs |
| 122 | shaft position |
| 124 | outer array of hub bolt holes |
| 126 | inner array of hub bolt holes |
| 128 | array of shaft bolt holes |
| 130 | inner bolt array diameter |
| 132 | outer bolt array diameter |
| 134 | shaft bolt array diameter |
| 136 | inner diameter |
| 138 | outer diameter |
| 140 | adapter bold holes |
| 142 | adapter bold holes |
| 144 | adapter bolt holes |
| 146 | first bolt array diameter |
| 148 | second bolt array diameter |
| 150 | third bolt array diameter |
| 152 | First set of bolts |
| 154 | second set of bolts |
| 156 | third set of bolts |
| 202 | adapter |
| 260 | first mounting flange |
| 262 | first mounting flanges |
| 264 | second mounting flanges |
| 266 | side |
| 268 | bolt holes |
| 270 | bolt holes |
| 272 | fasteners |
| 274 | interior side |
| 302 | hub-to-shaft adapter |
| 360 | first mounting flanges |
| 362 | second mounting flanges |
| 364 | portion |
| 402 | adapter |
| 480 | locking system |
| 482 | rotor lock holes |
| 484 | corresponding locking pin(s) |
| 486 | actuator |
| 488 | component |
| 490 | arrow |

## Claims

1. A rotor assembly (100) for a wind turbine, the rotor assembly comprising:
a rotor hub (104) including a mounting flange (114), the mounting flange defining an array of hub bolt holes (124, 126);
a rotor shaft (106) including a shaft flange (116), the shaft flange defining an array of shaft bolt holes (128), the array of shaft bolt holes being at least one of radially offset or circumferentially offset from the array of hub bolt holes; and
a hub-to-shaft adapter (102) coupled between the mounting flange and the shaft flange, the adapter defining a first array of adapter bolt holes (140, 142) and a second array of adapter bolt holes (144) offset from the first array of adapter bolt holes, the first array of adapter bolt holes (140, 142)configured to be aligned with the array of hub bolt holes (124,126) defined in the mounting flange and the second array of adapter bolt holes (144) configured to be aligned with the array of shaft bolt holes (128) defined in the shaft flange (116);
wherein the hub-to-shaft adapter couples the rotor hub and the rotor shaft, the rotor hub and the rotor shaft having mismatched or misaligned bold holes such that the rotor hub is not configured to be mounted to the rotor shaft.

2. The rotor assembly of claim 1, wherein the array of shaft bolt holes is spaced radially inwardly from the array of hub bolt holes.

3. The rotor assembly of claim 1, wherein the mounting flange defines an inner diameter around its inner circumference and the shaft flange defines an outer diameter around its outer circumference, the inner diameter of the mounting flange being greater than or equal to the outer diameter of the shaft flange.

4. The rotor assembly of claim 1, further comprising a set of fasteners inserted through aligned bolt holes of the array of hub bolt holes and the first array of adapter bolt holes to couple the adapter to the rotor hub, and/or
further comprising a set of fasteners inserted through aligned bolt holes of the array of shaft bolt holes and the second array of adapter bolt holes to couple the adapter to the rotor shaft.

5. The rotor assembly of claim 1, wherein the first array of adapter bolt holes are configured to be circumferentially and radially aligned with the array of hub bolt holes defined in the mounting flange and the second array of adapter bolt holes are configured to be circumferentially and radially aligned with the array of shaft bolt holes.

6. The rotor assembly of claim 1, wherein the adapter includes a first mounting flange and a second mounting flange spaced axially apart from the first mounting flange, the first array of adapter bolt holes being defined through the first mounting flange and the second array of adapter bolt holes being defined through the second mounting flange.

7. The rotor assembly of claim 6, further comprising a connector portion extending axially between the first and second mounting flanges.

8. The rotor assembly of claim 7, wherein the first mounting flange extends radially outwardly from the connector portion and the second mounting flange extends radially inwardly from the connector portion.

9. The rotor assembly of claim 7, wherein the first and second mounting flanges both extend radially inwardly from the connector portion, optionally, wherein the connector portion is cylindrically shaped.

10. The rotor assembly of claim 7, wherein the connector portion defines a tapered profile between the first and second mounting flanges, optionally,
further comprising one or more bolt holes defined through the connector portion, the bolt holes being configured to receive fasteners extending through the connector portion to one of the shaft flange or the mounting flange.

11. The rotor assembly of claim 1, further comprising at least one rotor lock hole defined through the adapter, the at least one rotor lock hole being configured to receive a rotor locking pin of the wind turbine, optionally wherein the adapter is ring-shaped.

12. A method for assembling components of a rotor assembly (100) of a wind turbine, the rotor assembly including a rotor hub (104) having a mounting flange (114) and a rotor shaft (106) having a shaft flange (116), the method comprising:
positioning an adapter (102, 202, 302) between the mounting flange (114) and the shaft flange (116), the adapter defining a first array of adapter bolt holes (140, 142) and a second array of adapter bolt holes (144), the first array of adapter bolt holes (140, 142) being at least one of circumferentially offset or radially offset from the second array of adapter bolt holes;
aligning the first array of adapter bolt holes (140, 142) with an array of hub bolt holes (124, 126) defined in the mounting flange (114); and
aligning the second array of adapter bolt holes (144) with an array of shaft bolt holes (128) defined in the shaft flange (116), wherein the array of shaft bolt holes are offset with the array of hub bolt holes;
wherein the hub-to-shaft adapter couples the rotor hub and the rotor shaft, the rotor hub and the rotor shaft having mismatched or misaligned bold holes such that the rotor hub is not configured to be mounted to the rotor shaft

13. The method of claim 12, further comprising inserting a first set of fasteners through aligned bolt holes of the array of hub bolt holes and the first array of adapter bolt holes to couple the adapter to the rotor hub, optionally
further comprising inserting a set of fasteners through aligned bolt holes of the array of shaft bolt holes and the second array of adapter bolt holes to couple the adapter to the rotor shaft.

14. The method of claim 12, wherein the array of shaft bolt holes are spaced radially inwardly from the array of hub bolt holes.

15. The method of claim 12, wherein the mounting flange defines an inner diameter around its inner circumference and the shaft flange defines an outer diameter around its outer circumference, the inner diameter of the mounting flange being greater than or equal to the outer diameter of the shaft flange.

## Patentansprüche

1. Rotorbaugruppe (100) für eine Windkraftanlage, wobei die Rotorbaugruppe umfasst:
eine Rotornabe (104) mit einem Montageflansch (114), wobei der Montageflansch eine Anordnung von Nabenbolzenlöchern (124, 126) definiert,
eine Rotorwelle (106) mit einem Wellenflansch (116), wobei der Wellenflansch eine Anordnung von Wellenbolzenlöchern (128) definiert, wobei die Anordnung von Wellenbolzenlöchern radial versetzt und/oder in Umfangsrichtung versetzt zu der Anordnung von Nabenbolzenlöchern ist; und
einen Nabe-Welle-Adapter (102), der zwischen dem Montageflansch und dem Wellenflansch gekoppelt ist, wobei der Adapter eine erste Anordnung von Adapterbolzenlöchern (140, 142) und eine zweite Anordnung von Adapterbolzenlöchern (144) definiert, die gegenüber der ersten Anordnung von Adapterbolzenlöchern versetzt sind, wobei die erste Anordnung von Adapterbolzenlöchern (140, 142) so konfiguriert ist, dass sie mit der Anordnung von Nabenbolzenlöchern (124, 126), die in dem Montageflansch definiert sind, ausgerichtet ist, und die zweite Anordnung von Adapterbolzenlöchern (144) so konfiguriert ist, dass sie mit der Anordnung von Wellenbolzenlöchern (128), die in dem Wellenflansch (116) definiert sind, ausgerichtet ist;
wobei der Nabe-zu-Welle-Adapter die Rotornabe und die Rotorwelle miteinander verbindet, wobei die Rotornabe und die Rotorwelle nicht zueinander passende oder falsch ausgerichtete Bolzenlöcher aufweisen, so dass die Rotornabe nicht zur Montage an der Rotorwelle konfiguriert ist.

2. Rotorbaugruppe nach Anspruch 1, wobei die Anordnung der Wellenbolzenlöcher radial nach innen von der Anordnung der Nabenbolzenlöcher beabstandet ist.

3. Rotorbaugruppe nach Anspruch 1, wobei der Montageflansch einen Innendurchmesser um seinen Innenumfang und der Wellenflansch einen Außendurchmesser um seinen Außenumfang definiert, wobei der Innendurchmesser des Montageflansches größer oder gleich dem Außendurchmesser des Wellenflansches ist.

4. Rotorbaugruppe nach Anspruch 1, ferner umfassend einen Satz von Befestigungselementen, die durch ausgerichtete Schraubenlöcher der Anordnung von Nabenschraubenlöchern und der ersten Anordnung von Adapterschraubenlöchern eingesetzt sind, um den Adapter mit der Rotornabe zu koppeln, und/oder
ferner umfassend einen Satz von Befestigungselementen, die durch fluchtende Schraubenlöcher der Anordnung von Wellenschraubenlöchern und der zweiten Anordnung von Adapterschraubenlöchern eingeführt werden, um den Adapter mit der Rotorwelle zu koppeln.

5. Rotorbaugruppe nach Anspruch 1, wobei die erste Anordnung von Adapterbolzenlöchern so konfiguriert ist, dass sie in Umfangsrichtung und radial mit der im Montageflansch definierten Anordnung von Nabenbolzenlöchern fluchtet, und die zweite Anordnung von Adapterbolzenlöchern so konfiguriert ist, dass sie in Umfangsrichtung und radial mit der Anordnung von Wellenbolzenlöchern fluchtet.

6. Rotorbaugruppe nach Anspruch 1, wobei der Adapter einen ersten Montageflansch und einen zweiten Montageflansch aufweist, der axial von dem ersten Montageflansch beabstandet ist, wobei die erste Anordnung von Adapterbolzenlöchern durch den ersten Montageflansch und die zweite Anordnung von Adapterbolzenlöchern durch den zweiten Montageflansch definiert ist.

7. Rotorbaugruppe nach Anspruch 6 ferner umfassend einen Verbindungsabschnitt, der sich axial zwischen dem ersten und dem zweiten Befestigungsflansch erstreckt.

8. Rotorbaugruppe nach Anspruch 7, wobei sich der erste Montageflansch von dem Verbindungsabschnitt radial nach außen und der zweite Montageflansch von dem Verbindungsabschnitt radial nach innen erstreckt.

9. Rotorbaugruppe nach Anspruch 7, wobei sich der erste und der zweite Montageflansch beide radial nach innen von dem Verbindungsabschnitt erstrecken, optional, wobei der Verbindungsabschnitt zylindrisch geformt ist.

10. Rotorbaugruppe nach Anspruch 7, wobei der Verbindungsabschnitt zwischen dem ersten und dem zweiten Befestigungsflansch ein sich verjüngendes Profil definiert, optional,
ferner ein oder mehrere Bolzenlöcher umfasst, die durch den Verbindungsabschnitt definiert sind, wobei die Bolzenlöcher so konfiguriert sind, dass sie Befestigungsmittel aufnehmen, die sich durch den Verbindungsabschnitt zu einem der Wellenflansche oder dem Montageflansch erstrecken.

11. Rotorbaugruppe nach Anspruch 1, ferner umfassend mindestens ein durch den Adapter definiertes Rotorverriegelungsloch, wobei das mindestens eine Rotorverriegelungsloch so konfiguriert ist, dass es einen Rotorverriegelungsstift der Windturbine aufnehmen kann, optional, wobei der Adapter ringförmig ist.

12. Verfahren zum Zusammenbauen von Komponenten einer Rotorbaugruppe (100) einer Windturbine, wobei die Rotorbaugruppe eine Rotornabe (104) mit einem Montageflansch (114) und eine Rotorwelle (106) mit einem Wellenflansch (116) umfasst, wobei das Verfahren umfasst:
Positionieren eines Adapters (102, 202, 302) zwischen dem Montageflansch (114) und dem Wellenflansch (116), wobei der Adapter eine erste Anordnung von Adapterbolzenlöchern (140, 142) und eine zweite Anordnung von Adapterbolzenlöchern (144) definiert, wobei die erste Anordnung von Adapterbolzenlöchern (140, 142) in Umfangsrichtung versetzt und/oder radial versetzt zu der zweiten Anordnung von Adapterbolzenlöchern ist;
Ausrichten der ersten Anordnung von Adapterbolzenlöchern (140, 142) mit einer Anordnung von Nabenbolzenlöchern (124, 126), die in dem Montageflansch (114) definiert sind; und
Ausrichten der zweiten Anordnung von Adapterbolzenlöchern (144) mit einer Anordnung von Wellenbolzenlöchern (128), die in dem Wellenflansch (116) definiert sind, wobei die Anordnung der Wellenbolzenlöcher gegenüber der Anordnung der Nabenbolzenlöcher versetzt ist;
wobei der Nabe-zu-Welle-Adapter die Rotornabe und die Rotorwelle koppelt, wobei die Rotornabe und die Rotorwelle nicht passende oder falsch ausgerichtete Bolzenlöcher aufweisen, so dass die Rotornabe nicht so konfiguriert ist, dass sie an der Rotorwelle montiert werden kann.

13. Verfahren nach Anspruch 12, ferner umfassend das Einsetzen eines ersten Satzes von Befestigungselementen durch ausgerichtete Bolzenlöcher der Anordnung von Nabenbolzenlöchern und der ersten Anordnung von Adapterbolzenlöchern, um den Adapter mit der Rotornabe zu koppeln, optional
ferner umfassend das Einsetzen eines Satzes von Befestigungselementen durch ausgerichtete Schraubenlöcher der Anordnung von Wellenschraubenlöchern und der zweiten Anordnung von Adapterschraubenlöchern, um den Adapter mit der Rotorwelle zu koppeln.

14. Verfahren nach Anspruch 12, wobei die Anordnung der Wellenschraubenlöcher radial nach innen von der Anordnung der Nabenschraubenlöcher beabstandet ist.

15. Verfahren nach Anspruch 12, wobei der Montageflansch einen Innendurchmesser um seinen Innenumfang und der Wellenflansch einen Außendurchmesser um seinen Außenumfang definiert, wobei der Innendurchmesser des Montageflansches größer oder gleich dem Außendurchmesser des Wellenflansches ist.

## Revendications

1. Ensemble rotor (100) pour une turbine éolienne, l'ensemble rotor comprenant :
un moyeu de rotor (104) comportant une bride de montage (114), la bride de montage définissant une série de trous de boulon de moyeu (124, 126) ;
un arbre de rotor (106) comportant une bride d'arbre (116), la bride d'arbre définissant une série de trous de boulon d'arbre (128), la série de trous de boulon d'arbre étant au moins l'un parmi des radialement décalés ou circonférentiellement décalés par rapport à l'ensemble de trous de boulon de moyeu ; et
un adaptateur moyeu-arbre (102) accouplé entre la bride de montage et la bride d'arbre, l'adaptateur définissant une première série de trous de boulon d'adaptateur (140, 142) et une seconde série de trous de boulon d'adaptateur (144) décalés par rapport à la première série de trous de boulon d'adaptateur, la première série de trous de boulon d'adaptateur (140, 142) étant conçus pour être alignés avec la série de trous de boulon de moyeu (124, 126) définis dans la bride de montage et la seconde série de trous de boulon d'adaptateur (144) étant conçus pour être alignés avec la série de trous de boulon d'arbre (128) définis dans la bride d'arbre (116) ;
dans lequel l'adaptateur moyeu-arbre accouple le moyeu de rotor et l'arbre de rotor, le moyeu de rotor et l'arbre de rotor ayant des trous de boulon non correspondants ou non alignés de telle sorte que le moyeu de rotor n'est pas conçu pour être monté sur l'arbre de rotor.

2. Ensemble rotor selon la revendication 1, dans lequel la série de trous de boulon d'arbre sont espacés radialement vers l'intérieur par rapport à la série de trous de boulon de moyeu.

3. Ensemble rotor selon la revendication 1, dans lequel la bride de montage définit un diamètre interne autour de sa circonférence interne et la bride d'arbre définit un diamètre externe autour de sa circonférence externe, le diamètre interne de la bride de montage étant supérieur ou égal au diamètre externe de la bride d'arbre.

4. Ensemble rotor selon la revendication 1, comprenant en outre un jeu de fixations insérées à travers des trous de boulon alignés de la série de trous de boulon de moyeu et de la première série de trous de boulon d'adaptateur pour accoupler l'adaptateur au moyeu de rotor, et/ou
comprenant en outre un jeu de fixations insérées à travers des trous de boulon alignés de la série de trous de boulon d'arbre et de la seconde série de trous de boulon d'adaptateur pour accoupler l'adaptateur à l'arbre de rotor.

5. Ensemble rotor selon la revendication 1, dans lequel la première série de trous de boulon d'adaptateur sont conçus pour être circonférentiellement et radialement alignés avec la série de trous de boulon de moyeu définis dans la bride de montage et la seconde série de trous de boulon d'adaptateur sont conçus pour être circonférentiellement et radialement alignés avec la série de trous de boulon d'arbre.

6. Ensemble rotor selon la revendication 1, dans lequel l'adaptateur comporte une première bride de montage et une seconde bride de montage espacée axialement par rapport à la première bride de montage, la première série de trous de boulon d'adaptateur étant définis à travers la première bride de montage et la seconde série de trous de boulon d'adaptateur étant définis à travers la seconde bride de montage.

7. Ensemble rotor selon la revendication 6, comprenant en outre une partie d'élément de liaison s'étendant axialement entre les première et seconde brides de montage.

8. Ensemble rotor selon la revendication 7, dans lequel la première bride de montage s'étend radialement vers l'extérieur par rapport à la partie d'élément de liaison et la seconde bride de montage s'étend radialement vers l'intérieur par rapport à la partie d'élément de liaison.

9. Ensemble rotor selon la revendication 7, dans lequel les première et seconde brides de montage s'étendent toutes deux radialement vers l'intérieur par rapport à la partie d'élément de liaison, éventuellement, dans lequel la partie d'élément de liaison est de forme cylindrique.

10. Ensemble rotor selon la revendication 7, dans lequel la partie d'élément de liaison définit un profil conique entre les première et seconde brides de montage, éventuellement,
comprenant en outre un ou plusieurs trous de boulon définis à travers la partie d'élément de liaison, les trous de boulon étant conçus pour recevoir des fixations s'étendant à travers la partie d'élément de liaison jusqu'à l'une parmi la bride d'arbre ou la bride de montage.

11. Ensemble rotor selon la revendication 1, comprenant en outre au moins un trou de verrou de rotor défini à travers l'adaptateur, l'au moins un trou de verrou de rotor étant conçu pour recevoir une goupille de verrouillage de rotor de la turbine éolienne, éventuellement dans lequel l'adaptateur est en forme d'anneau.

12. Procédé d'assemblage de composants d'un ensemble rotor (100) d'une turbine éolienne, l'ensemble rotor comportant un moyeu de rotor (104) ayant une bride de montage (114) et un arbre de rotor (106) ayant une bride d'arbre (116), le procédé comprenant :
le positionnement d'un adaptateur (102, 202, 302) entre la bride de montage (114) et la bride d'arbre (116), l'adaptateur définissant une première série de trous de boulon d'adaptateur (140, 142) et une seconde série de trous de boulon d'adaptateur (144), la première série de trous de boulon d'adaptateur (140, 142) étant au moins l'un parmi des circonférentiellement décalés ou radialement décalés par rapport à la seconde série de trous de boulon d'adaptateur ;
l'alignement de la première série de trous de boulon d'adaptateur (140, 142) avec une série de trous de boulon de moyeu (124, 126) définis dans la bride de montage (114) ; et
l'alignement de la seconde série de trous de boulon d'adaptateur (144) avec une série de trous de boulon d'arbre (128) définis dans la bride d'arbre (116), dans lequel la série de trous de boulon d'arbre sont décalés avec la série de trous de boulon de moyeu ;
dans lequel l'adaptateur moyeu-arbre accouple le moyeu de rotor et l'arbre de rotor, le moyeu de rotor et l'arbre de rotor ayant des trous de boulon non correspondants ou non alignés de telle sorte que le moyeu de rotor n'est pas conçu pour être monté sur l'arbre de rotor.

13. Procédé selon la revendication 12, comprenant en outre l'insertion d'un premier jeu de fixations à travers des trous de boulon alignés de la série de trous de boulon de moyeu et de la première série de trous de boulons d'adaptateur pour accoupler l'adaptateur au moyeu de rotor, éventuellement
comprenant en outre l'insertion d'un jeu de fixations à travers des trous de boulon alignés de la série de trous de boulon d'arbre et de la seconde série de trous de boulon d'adaptateur pour accoupler l'adaptateur à l'arbre de rotor.

14. Procédé selon la revendication 12, dans lequel la série de trous de boulon d'arbre sont radialement espacés vers l'intérieur par rapport à la série de trous de boulon de moyeu.

15. Procédé selon la revendication 12, dans lequel la bride de montage définit un diamètre interne autour de sa circonférence interne et la bride d'arbre définit un diamètre externe autour de sa circonférence externe, le diamètre interne de la bride de montage étant supérieur ou égal au diamètre externe de la bride d'arbre.
